# EUROPEAN PATENT SPECIFICATION

(11) **EP 1 297 667 B1**
(45) Date of publication and mention of the grant of the patent: **06.04.2005**
(21) Application number: 00946530.3
(22) Date of filing: 06.07.2000
(51) Int. Cl.: H04L 12/58, G06F 17/60

(54) **ELECTRONIC GREETING CARD**
ELEKTRONISCHE GLÜCKWUNSCHKARTE
CARTE DE VOEUX ELECTRONIQUE

(43) Date of publication of application: 02.04.2003
(73) Proprietor: Hallmark Cards Nederland B.V., 2900 AA Capelle Aan De Ijssel (NL)
(72) Inventor: DEN BOER, Jan, Arie, NL-3315 ME Dordrecht (NL)
(74) Representative: van Westenbrugge, Andries
(86) International application number: PCT/NL2000/000474
(87) International publication number: WO 2002/003630

(56) References cited:
- US-A- 5 426 594
- US-A- 5 513 117
- ANONYMOUS: "Wireless Cellular Phone Email Gateway OfficeServant.com Announces Innovative WAP Applications for Valentine's Day With CellCardz!" INTERNET ARTICLE, [Online] 9 February 2000 (2000-02-09), XP002162302 Retrieved from the Internet: <URL:http://www.groupweb.com/your/officese rvant_feb092000.htm> [retrieved on 2001-03-06]

## Description

### Field of the invention

The invention relates to the field of electronically transmitting greetings to a recipient

### Background of the invention

Ever since mankind existed, greetings that memorialize social occasions have been exchanged between individuals. In the year 2000, the use of electronic devices enable people to communicate with one another and this capability has revolutionised our perception of space and time. Since the introduction of the Internet, this perception has moved into a different plain of reality. People now have many choices in the way they can interact with one another. The introduction of mobile phones and the ability to browse interactive content from Internet (WAP) sites opens up even more possibilities that were impossible to conceive just a few years ago. Personalised images and icons are displayed in small LCD screens, mail readers and global positioning systems and provide additional functionality to the mobile phones.

US-A-5,426,594 discloses an electronic greetings system comprising a server and a database storing data regarding electronic greetings components, the server being arranged to:
a) receive a first message to select an electronic greetings component from the database;
b) receive a second message regarding an address of a recipient;
c) transmitting the component to the recipient.

### Summary of the invention

The object of the invention is to provide a user with the option to send electronic greetings to a recipient either as e-mail message or as a message to a mobile device that is equipped with a WAP (or similar) capability.

To that end, the invention provides a REM electronic greetings system as defined in claim 1. The electronic greetings comprise a user selected combination of at least one electronic greetings component, selected from multiple types of media including: images, graphics, text, audio, and the like.

"REM" is an abbreviation of Real, Electronic, Mobile.

Within the arena of messaging software the REM electronic greetings system provides a unique and innovative solution for people on the move who want to make sure social occasions, such as family birthday or other happenings are recognised and celebrated using the very latest technology. Apart from social occasions relating to family matters, the concept of the REM electronic greetings system also takes care of all other types of messaging between friends, acquaintances, and colleagues and between groups of users that share common ground in other areas.

In using the REM electronic greetings system, the interactive user has the ability to access electronic greetings components that are available from a commercial vendor, such as Hallmark, the electronic greetings components consisting of images, sentiment, sound and video (future development) anytime, anywhere, anyplace, simply by logging on through the use of a mobile phone 2(1), 2(2) or similar wireless appliance. The user is also able to choose a suitable image from a content menu, customise any text and personalise the experience for the recipient. The recipient is alerted to the existence of the new message by the REM messaging component, and by accessing the WAP or HTML site, the recipient is offered a choice of delivery options. The recipient of the electronic greeting "card" can choose to have the card delivered in one of two electronic formats - to a WAP device or a desktop computer - or as a traditional printed and personalised paper-based product. Existing Internet E-Cards cannot offer this facility and it is this functionality that makes the REM electronic greetings system unique and a market first.

The REM electronic greetings system also provides a useful interface for businesses that would like to interact with their customers and business partners in an immediate, personal way. Other businesses may have access to their own dynamically configured REM module at one of the servers employed in the invention. In a preferred embodiment, a principal component in the design of the REM electronic greeting system is a Billing Service which allows operators of the REM electronic greetings system to interface their existing Accounts Receivable functions to REM data storage and tracking modules, be they electronic or manual in design. The REM electronic greetings system may contain proprietary software that tracks consumer usage/activity and then report the same to the operator for billing purposes - in the case of an existing mobile network operator, the REM electronic greetings system may download data directly onto the operator's monthly invoices to its customers.

The next generation (3G) phones will have speech recognition capabilities and advanced navigational features to interface with existing and new types of applications like the REM electronic greetings system. New features and functionality may be added to REM as and when technological development permit.

The REM electronic greetings system also provides a method of transmitting electronic greetings as defined in claim 10.

The invention also relates to a computer program product as defined in claim 11.

### Brief description of the drawings

Below, the invention is explained in detail with reference to some drawings which are only intended to illustrate and not to limit the scope of protection of the present invention.
Figure 1 shows a block diagram of a possible embodiment of an architecture of the REM electronic greetings system;
Figure 2 shows an example of a computer system;
Figure 3 shows a schematic drawing of a WAP telephone;
Figure 4 shows a flow diagram of steps carried out in the REM electronic greetings system;
Figure 5 shows a database diagram E-card module;
Figure 6 shows a database diagram M-card module.

### Description of preferred embodiment

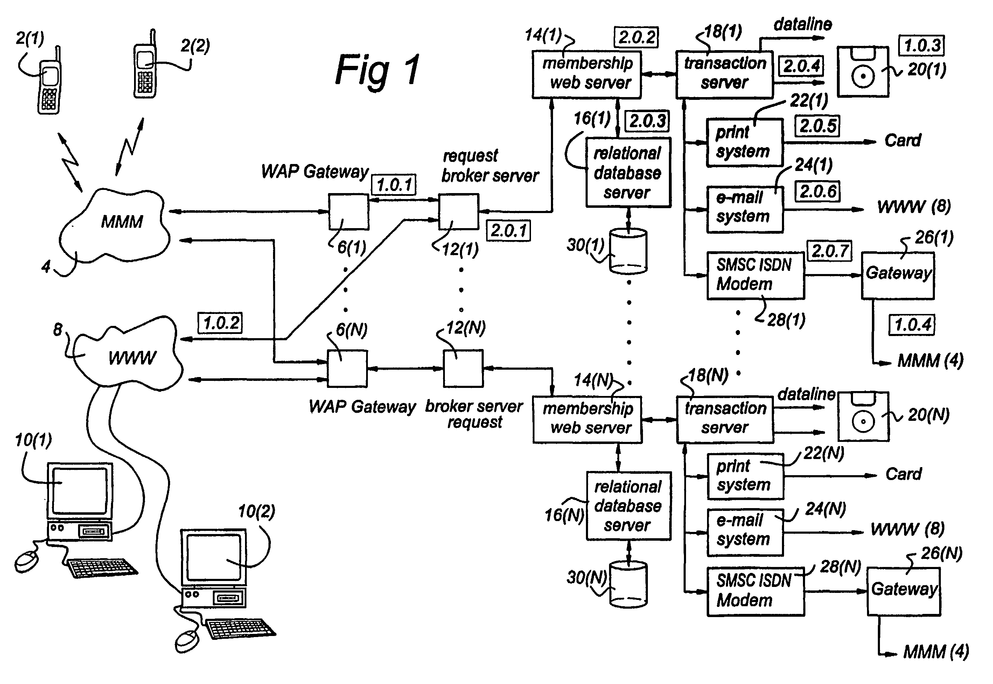

Figure 1 illustrates in block diagram a possible embodiment of the REM electronic greetings system on the level of hardware configurations. The flow how greetings are routed through the REM electronic greetings system and what parts belong to the REM electronic greetings system (REM), where the connections are with outside vendors/parties and the Internet is described with reference to this figure 1.

Figure 1 has boxes numbered 1.0.x and boxes numbered 2.0.x next to hardware components. These boxes do not refer to hardware components but refer to main activities that take place in the specific part of figure 1 and are used as section numbers in the description below. The boxes numbered 1.0.x are external to the REM electronic greetings system whereas the boxes numbered 2.0.x are internal to the REM electronic greetings system.

However, first of all a description of the hardware components of figure 1 is given.

Basically, the core part of the REM electronic greetings system can be accessed in three different ways:
- the first method of access is through a mobile telecommunication network 4, here referred to as "mobile Internet" MMM;
- the second method of access is through the Internet 8, here referred to by WWW;
- the third method of access is through SMS messages, e.g., through SMSC ISDN modems 28(1), ...,28(N).

Figure I shows two mobile phones 2(1), 2(2). In practice there are more than two mobile phones to which the REM electronic greetings system applies. Moreover, the REM electronic greetings system is not restricted to mobile telephones only. Other mobile devices may be provided for communication as well.

The mobile telephones 2(1), 2(2) are able to communicate with one of a plurality of provider WAP gateways 6(1), ..., 6(N) of which two are shown in figure 1. However, there may be more such WAP gateways depending on the number of providers participating in the REM electronic greetings system . Preferably, there are as many provider WAP gateways as there are providers participating in the REM electronic greetings system since that provides for the best possible separation between components and database contents of the different providers. For the same reason, the system is preferably designed as having N equal subsystems 6(n), ..., 28(n); n = 1, 2, , ....., N, as shown in figure 1, one subsystem per provider.

Each provider WAP gateway 6(n) is connected to a request broker server 12(n). Each request broker server 12(n) is connected to a membership WEB server 14(n). Each membership WEB server 14(n) is connected to a, preferably relational, database server 16(n) and a transaction server 18(n). Each relational database server 16(n) is connected to at least one database 30(n). Each transaction server 18(n) is connected to a print system 22(n), an e-mail system (24(n), and an SMSC ISDN modem 28(n). Each SMSC ISDN modem 28(n) is connected to a gateway 26(n) to provide access to the mobile Internet MMM 4. Further output of the transaction server 18(n) may stored on a floppy disc or other data carrier 20(n), as will be explained below.

It is to be understood that figure 1 shows just one possible implementation of the REM electronic greetings system. The blocks of the block diagram are mainly intended to facilitate the explanation of the REM electronic greetings system, however, for instance, some of the servers 12(n), 14(n), 16(n), 18(n) may well be implemented as one single server or another number of servers having the same added functionality. Alternatively, they may be implemented as a plurality of different servers arranged to communicate with one another to carry the required functions that are explained below. The individual servers used may even be located remote from one another and be arranged, e.g., to communicate with one another through any known telecommunication network like the PSTN (Public Switched Telephone Network), the Internet, a Wide Area Network, a Local Area Network, etc. There may even be provided for master slave arrangements, etc.

Although one (relational) database 30(n) per subsystem has been shown there may be provided for a larger number of databases per subsystems located at different locations. Alternatively, subsystems may share one or more databases, although this may not be preferred because of less safety.

Figure 1 also shows two computer systems 10(1), 10(2). In practice there are a large number of computer systems. They are connected to the world wide web (WWW) 8. The request broker servers 12(n) are also connected to the world wide web 8.

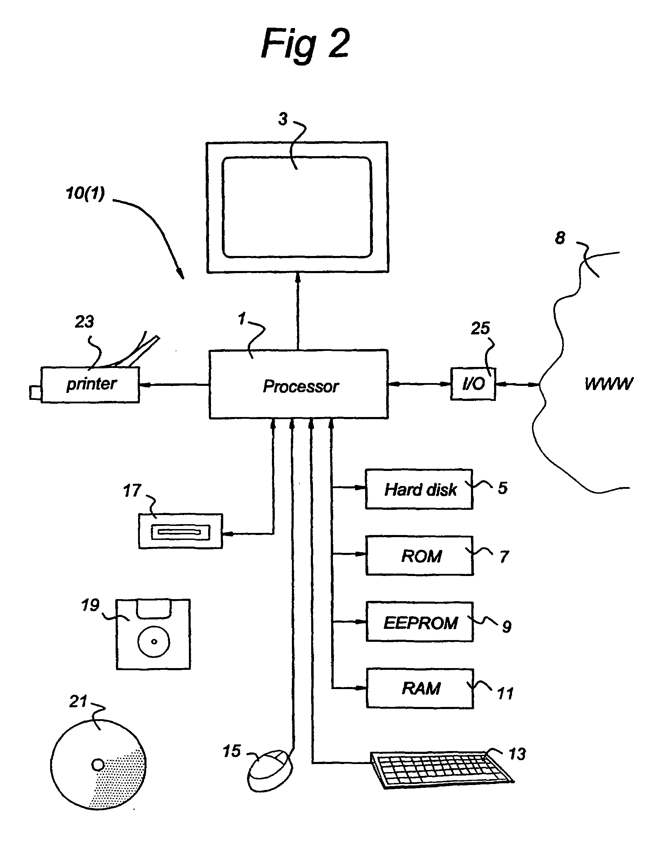

The computer systems 10(1), 10(2) may have any suitable configuration. One possible arrangement is shown in figure 2.

The computer system shown in figure 2 comprises a processor 1 for carrying out arithmetic operations.

The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to means for inputting instructions, data etc. by a user, like a keyboard 13, and a mouse 15. Other input means, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, etc., as is known to persons skilled in the art.

The processor 1 is also connected to a printer 23 for printing output data on paper, as well as to a display 3, for instance, a monitor or LCD (Liquid Crystal Display) screen, or any other type of display known to persons skilled in the art.

The processor 1 is connected to the WWW 8 by means of I/O means 25. The processor 1 is arranged to communicate with other communication arrangements through the network 8.

The processor 1 may be implemented as stand alone system, or as a plurality of parallel operating processors each arranged to carry out subtasks of a larger computer program, or as one or more main processors with several subprocessors. Parts of the functionality may even be carried out by remote processors communicating with processor 1 through the network 8.

The servers 12(n), 14(n), 16(n), 18(n) may have similar configurations as the one shown in figure 2.

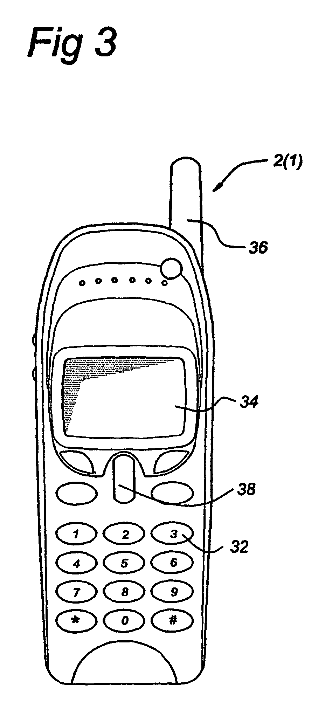

The mobile telephones 2(1), 2(2) may have any design, e.g., a design as shown in figure 3. The only requirement is that it is provided with a WAP or similar facility. The telephone is provided with keys 32, a display 34, an antenna 36, and one or more browser (navigation) buttons 38. In figure 3, the telephone 2(1) is shown to display an electronic greeting card.

Now, the functionality of the REM electronic greetings system shown in figure 1 is explained.

### 1.0.1 Consumer enters the system (WAP site) with mobile device 2(1), 2(2) via the WAP gateway 6(n).

In the REM electronic greetings system according to the invention, a consumer has currently three options with his WAP telephone 2(1), 2(2) :
(a) Selecting and sending a Mobile-Greeting (M-Card).
(b) Receiving an M-card.
(c) Modifying personal profile.

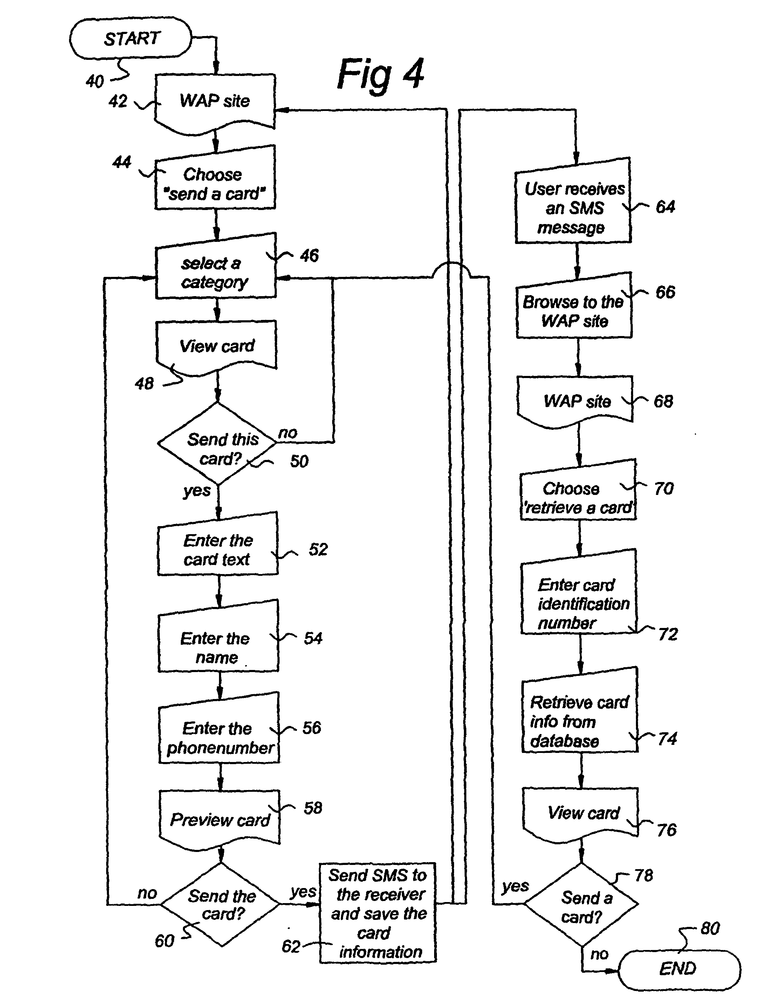

This is explained with reference to figure 4 that shows steps to be taken when sending a card to a mobile device. It is to be understood that similar steps are taken when sending a card to another device (for instance a PC) or a real card to a recipient.

### (a) Selecting and sending a Mobile Greeting Card (M-Card).

After the start 40, a splash screen menu appears on the consumer's mobile phone 2(1), 2(2). With the navigation or browser button 38 of the mobile phone 2(1), 2(2) the consumer can navigate to the content offered by the card provider through his website, step 42, and stored in one of the databases 30(n). The content is a range of culturally relevant M-Cards for all kind of greeting occasions. Sending occasions are comparable to the ones that are nowadays produced as physical ink on paper greeting cards.

The user chooses the option "send a card" from a menu presented to him, step 44. Then, in step 46, he is offered a choice to select a category. The user views a plurality of electronic greetings cards and after each card he is allowed to inform the system that he has selected the last card shown or he likes to see more cards, steps 48/50.

The consumer is allowed to enter text (or other information such as signs or pictures) for the card, step 52, and to enter the name of the recipient, step 54. Then, he keys in the phone number of the recipient, if he chooses to send the greeting to the recipient's mobile device 2(1), 2(2), or the e-mail address if he chooses to send the greeting card to the recipient's personal computer/workstation 10(1), 10(2), step 56.

In step 58, the may preview the card before sending, and in step 60 he is asked permission to send. If not, the program running on the system returns to step 46. If yes, the program continues with step 62 in which an SMS message is sent to the recipient and the card information is stored in one of the databases 30(n).

After step 62, the sending party returns to step 42. Steps 64-80 relate to the reception of a card made in steps 46-60.

### (b) Receiving an M-Card.

In step 64, a recipient of an M-card receives the SMS that the sender has sent him in step 62 together with a password. An example is:
sms example max 160 characters
HAPPY BIRTHDAY - FROM: #phonenumber sender# - Goto #provider# - HALLMARK-CARDS or HALLMARK.NL and enter the following code [ABC12345] to retrieve your personal message from #name sender#!

The reason why the consumer is informed via an SMS message is because the current wireless protocol (WAP) has no push technology. In other words, the content is not automatically pushed to the recipient's mobile device 2(1), 2(2). Currently, the recipient needs to log on, in the way he does when he wants to select and send an M-card, and then the sent content will be shown to the recipient on the screen. It is to be expected that the lack of push technology will be solved in the near future. Then, a recipient will directly see the content on the mobile screen without logging on to the website.

After the recipient has received the SMS message the recipient browses to the card provider's website in step 66. In step 70, he is within the website and in step 70 he chooses the option "retrieve a card". Then, in step 72, he must enter the card identification number received with the SMS message, and the card information will be retrieved from the database 30(n) where it is stored, step 74.

In step 76, the recipient may view the card received, and in step 78 the recipient may be asked to reply by returning a card to the sender. If he wishes to do so he is directed to step 46. Otherwise the program will end, step 80.

### (c) Modifying personal profile.

The consumer can create and edit his personal address book in the mentioned menu. This option is not shown in figure 4 but is straight forward. The address book that is stored in one of the databases 30(n) will provide more options than a traditional address book.. In addition to all standard items, like name, address, phone number, e-mail address etc., the consumer can identify specific ways of greetings for specific persons in his address book. For example, grandmother has no mobile phone but does have a personal computer 10(1), 10(2). Then, the consumer can specify that, when a greeting to grandmother must be transmitted the senders mobile device 2(1), 2(2) will automatically choose to send an Electronic Card to her computer 10(1), 10(2) and not to a mobile device 2(1), 2(2).

A comparable example would be that the consumer has specified that grandmother can only receive an ink on paper card, ordered by the sender through his mobile device 2(1), 2(2).

The advantage for the consumer of creating and editing /maintaining a personal profile is that the REM system will become more user friendly. A recipient mentioned in the profile can be selected without the necessity of keying in name and telephone number. An option of including date of birth of potential recipients in the address book will allow the *system* to generate an M card (or E-card or R-card) automatically on a specific date and have it sent without interference of the sender on that date (reminder service).

### 1.0.2 Consumer enters the website with a personal computerlworkstation 10(1), 10(2).

Also personal computers or workstations 10(1), 10(2) are able to access the card provider's website. A user of a personal computer 10(1), 10(2) has the following options:
(a) Browsing interactive content
(b) Sending R.E.M. Cards
(c) Receiving E.M. Cards
(d) Create and/or edit personal profile

### (a), (b), (c) Browsing interactive content; sending and receiving (R)EM Cards.

Current websites, which are often created in HTML or in Flash technology but certainly not limited thereto, comprise far more advanced content than the current WAP technology. The current bandwidth of the GSM network is limited to a range between 9.6 kbps and 56 kbps per second. It is expected, however, that this will increase significantly over time.

The content on current websites has today full colour animated content and streaming video. The user of a personal computer 10(1), 10(2) can browse on all content and functionality offered by the website. A part of the content offered is selecting, sending and receiving E-Cards which exist today and which is being practised by thousands of various sites.

The link to the REM system is that a consumer can send an E-card downscaled as to its resolution, from the website to a mobile device 2(1), 2(2). The E-cards as stored in one of the databases 30(n) have to be downscaled to a certain resolution in terms of kbps so that transmission through the current limited bandwidth of the GSM network works smoothly. In practice, such a downscaling process will not be carried out in real-time since this is too time-consuming. Preferably, downscaled versions of the E-cards are separately stored in one of the databases 30(n) and retrieved when a request for transmission to a WAP (or similar) device is received. In a similar way the databases 30(n), preferably, comprise separate versions of the cards suitable for transmission a R-card. This also applies to possible audio and video information stored to be sent to a recipient. As far as the inventors of the present invention are aware of, all current websites offering E-Cards only have the capability to send image content from a personal computer to another personal computer.

When a consumer wants to send a greeting card, in this case from a PC or workstation 10(1), 10(2), the REM system will provide him with the option of sending a greeting (an M-Card) to a mobile device 2(1), 2(2). The same steps of the flow diagram of figure 4 will be carried out: Without the REM system of the invention he is limited to send an E-Card to another PC. Nowadays, various other sites offer the option to order ink on paper Cards (in our terminology R-card or Real card). However, no one offers the option of obtaining the same designs as E-Cards, M-Cards and R Cards (ink-on-paper, real Cards) via a mobile or PC device.

Receiving an M-card on a PC or workstation 10(1), 10(2) will happen in the same way as receiving a "traditional" E-card. The recipient will receive an e-mail, in which he is notified that someone has sent him an E-card. The e-mail invites him to surf to the specific site and collects the card sent by the sender.

Receiving an M-card on a mobile device 2(1), 2(2) will be as explained in section 1.0.1(b): the SMS message informs the recipient on the mobile device 2(1), 2(2)).

### (d) Create and/or edit personal profile.

Although the feature of creating and/or editing personal profiles on a PC today is, like all other content on WWW far more upscale than the personal profile as described in section 1.0.1(c), the functional options and logic are very much the same.

### 1.0.3 Billing system mobile content

The consumer has chosen a greeting card, steps 46-60, either via the mobile device 2(1), 2(2) (section 1.0.1) or via the WEB (section 1.0.2) and has completed all necessary and relevant variables. Once the consumer wants to send the card a message will appear on his screen stating the price of this specific action or content. As soon as the consumer has confirmed the sending of the M-card, step 60, all relevant data required to be able to invoice the consumer are logged by the data server 16(n) in step 62 (figure 4) in one of the databases 30(n) (figure 1).

Relevant data logged preferably comprises:
- Card type;
- Date when the card was sent;
- Unique identifier of the user; comparable to an IP address;
- Number of cards sent;
- Message on the card;
- Phone number and/or e-mail address of the sender;
- Phone number and/or e-mail address of the recipient;
- Amount to be invoiced: number of cards times content price;
- Type of mobile phone of the sender,
- Language of specific user;
- The mobile telecom provider and gateway;

All the records containing data described above will either be batches to be sent later or automatically be updated within the telecom provider's billing system. To that end, the records are stored in e.g. a floppy disk, CD-ROM or other data carrier 20(n), or are transferred via a telecommunication network, like the Internet, in a secure way to the telecom provider. It is important to realise that the mentioned data is logged by the card provider and transferred from the system to the specific telecom provider. The telecom provider subsequently includes this data in his existing billing system, which is operated to bill the subscribers.

### 1.0.4/2.0.7 SMS-Pager System

The consumer has three options to proceed within the SMS-Pager system:
(a) SMS or Pager text
(b) SMS or Pager text + attached bitmap
(c) SMS or Pager text + attached media

The consumer can send a greeting card through the WAP or website to a mobile device 2(1), 2(2). Nowadays, it is technically possible to receive an attached bitmap on some mobile devices (for instance, Nokia mobile phones). In the future, when mobile data transmission speed increases, it will be possible to send attached media like audio and video.

When the mobile device 2(1), 2(2) of the recipient is not equipped to handle WAP (or other (future) mobile interactive protocols) the recipient receives a SMS message on his or her mobile device 2(1), 2(2). Depending on the capabilities of the recipient's mobile device 2(1), 2(2) he or she can take a look at the attachments. When the mobile device 2( 1 ), 2(2) of the recipient is not equipped to receive an attached bitmap and/or media, he or she receives a plain SMS or Pager text message.

The SMS functionality is supported by the SMSC ISDN modems 28(n) and gateways 26(n).

### 2.0.1 Request broker servers 12(n)

The request broker servers 12(n) become active at the moment that users/visitors enter the card provider's site. These servers 12(n) redirect users/visitors to the right portal. In other words, if someone browses to the card provider's site with a mobile phone 2(1), 2(2) one of the broker servers 12(n) will direct the user to the WAP-site (section 1.0.1) or when the user enters through the use of a "normal" web browser (currently known for instance Netscape, or Explorer) he will be directed to the website of the card provider (section 1.0.2.). Proximity measurement is used to detect the originating country of the user visitor. Foreign visitors can be redirected to the applicable language and the card provider can show him the culturally relevant information.

This redirection of users is necessary to enable the deployment of a truly scaleable solution.

*User is being directed to the right portal*

### 2.0.2 Membership server 14(n)

The membership server 14(n) is the primary web server that becomes active after redirection by the broker server 12(n) (section 2.0.1). This server holds all relevant content both related to the WEB and WAP. The primary task of the membership server 14(n) is to trace and to authenticates all users/visitors. Through the use of personal settings, or property sheets it is possible to create and show personalised content.

*User is being authenticated*.

### 2.0.3 Database server 16(n)

The primary task of the (relational) database server 16(n) is to store all data concerning WAP and WEB users, buyers, distributed users, content managers and system administrators in database 30(n).

*The membership server 14(n) gets or puts all specific user data in the right tables of the centralised database.*

### 2.0.4 Transaction server 18(n)

The transaction server 18(n) commits and/or roll backs all transactions being initiated through both the WAP portal as well as the WEB portal. It also creates the batch files to be send to the telecom provider (section 1.0.3). This transaction server 18(n) controls all actions in order to transact without loss of data. In case a part of the chain fails, a roll back to the initial point of entry will be enforced.

*All actions specified by the user will be checked and deployed*

### 2. 0.5 Printing system and fulfilment centre 22(n).

When the consumer in either the WAP site (section 1.0.1) or the website (section 1.0.2) decides to send a hybrid real card the card will enrol in a fully automated handling process. The print system 22(n) is responsible for that. To support the option of sending a real card, the system allows a method with steps equivalent to the steps shown in figure 4. Instead of inputting a phone number (step 56) the consumer now inputs the address where the real card is to be delivered. The personal text, chosen letter type and all other relevant data will be formatted and printed on the chosen card. The consumers will then get feedback on the actions in the form of a message through the device 2(1), 2(2), 10(1), 10(2), or any other way, informing the consumer that the cards and the text on the rear side will be sent to the recipient. For a physical world wide rollout, strategic alliances between the card provider and various other parties, that can fulfil the printing, sending and payment services may be established.

### 2.0.6 E-mail system 24(n)

When the user of either the WAP or the WEB facilities decides to send an E-Card the consumer chooses a card out of different categories (step 46). The consumer fills in the text (step 52) and e-mail address (in a step similar to step 56). When the consumer is finished he clicks on a "send card" button shown on his display (step 60). The recipient receives an e-mail which includes a URL and text. The receiver goes to the given URL (in the future through any possible device) and can take a look at the E-card that was sent to him.

### Functional description

Now, some further remarks as to the functioning of the system will be made.

As explained above, the REM electronic greetings system may deliver greetings in both the physical and the non-physical world. The system is based on input from real people that subscribe to the system. The REM electronic greetings system functions like an organic entity. An important part of the REM electronic greetings may be the use of a site vocabulary that describes a family tree.

This tree view in combination with a reminder service makes it possible for users to customise the REM electronic greetings system in a comprehensive way. The following are a few selected scenarios designed to illustrate the use of the REM electronic greetings system.

### Scenario I:

Grandmother has a daughter who filled out a complete membership subscription at one of the geographically personalised websites. This database record does not only contain the strictly personal data of the user but can also contain the complete family tree. Whether or not this tree has been filled out by the user the benefits of sending and/or receiving REM greeting cards is obvious. The daughter has determined that she needs three different ways her greeting might be accessed by a recipient:
- Grandmother would like to receive a normal greeting card printed by the printing system 22(1), 22(N) so the REM electronic greetings system formats the output from the central database record controlled by the database server 16(n) in such a way that fulfilment can take place through a strategic alliance with partners that can handle this type of traffic, equipped with on-demand digital printing technology. Grandmother will receive her card via normal mail.
- Her daughter likes to receive an Internet E-Card. After a simple registration procedure this card is easily retrievable from the Internet. Messaging of the greetings will take place via an email message sent out by the E-mail system 24(1), 24(N).
- Her son loves sending and receiving SMS messages and also owns a WAP enabled phone 2(1), 2(2). He likes greetings in the form of specially formatted (SMS) messages, bitmaps, (from a future perspective) animation sequences or even video streams. He can choose to view his greeting via his SMS or WAP-capable phone through the SMS gateway providers 26(1), 26(N). Alternatively, he can access the same greeting from his (desktop) computer 10(1), 10(2) or if he wishes, order a printed version via his phone or computer interface to the WAP site.

### Scenario II:

The administrator of one of the distributed REM electronic greetings systems logs on to the REM electronic greetings, e.g., with his computer system 10(1), 10(2). After authentication has taken place the administrator now has the ability to change both the content of the specially formatted WAP E-Cards + the look and feel on the distributed website. Both the content-machine and the central database holding all records for existing cards will be at the tip of his fingers. All will be in the form of specially designed web pages where it is possible to delete, modify or add to the existing profile for that particular business.

### Scenario III:

A system administrator logs on to the REM electronic greetings system to deploy a distributed E-Card module. Replication of a module out of the central database system can be realised within a very short time.

### Attaching real products.

Apart from the use of the greeting system and the reminder service the possibility to attach real products like flowers and other types of gifts is evident. The use of proximity measurement software incorporated into the REM electronic greetings system makes this possible. With this it is possible to dynamically target large consumer markets in virtually all countries of our globe.

### Users:

REM has 5 types of user groups:

### • Passive Consumers

Grandmother does not know how to use the Internet and/or the advanced options of Internet and high-tech mobile phones. She receives classic cards through the mailbox by means of her daughter who has created a complete property sheet for her own family and acquaintances at the website referred to above.

### • Active Consumers

Both the daughter and her son know how to operate an Internet web-browser and Internet enabled (WAP or other mobile protocol like mode) mobile phones. Because of this they are in a different plain of interaction with REM. They now have the ability to instantly respond by calling either directly, or by sending their own electronic message. As a new alternative, REM enables the consumer to create a new family profile or add to an existing one. This will only be an option for directly related people. All other messaging outside of the family tree is a standalone service within REM.

### • Administrators

Because REM also provides for distributed usage, groups of distributors are given privileged rights to access their own personalised E, EM or REM module.

### • System Administrators

The system administrators are the ones that maintain REM. They are responsible for system (integrity) maintenance, content-management, and implementation of new functionality and overall performance.

### • Super Broker

The super broker is the highest user of the LDAP based authentication environment This top-level administrator has its password-expiry set on renewal for x length of time. This is the password capable to penetrate the entire system.

### Technology

The REM electronic greetings system may for instance run on a Windows NT® based platform. It interfaces with other systems by means of the Internet and Mobile (GSM/GPRS/3G) networks. Together: 'the central database, the distributed components (COM/DCOM) and the application files (HTML, ASP, XML, WML) make up for REM.

The operating system may be a Microsoft Windows NT® Server 4.0, the WEB server IIS 4.0, the general environment MCIS, the database an MS SQL Server 7.0, the components NI Software, and the Main (script) File Formats: *.HTML, *.ASP, *.WML, *.XML.

Because technology seems to follow a very steep curve in evolution, the design of all the different interfaces that are involved have a generic description. A consumer with a WAP (or equivalent) enabled phone 2(1), 2(2) inputs his data in a completely different graphical environment than a user that types a message on a personal computer 10(1), 10(2). The integrated interface-machine of the REM electronic greetings system describes all possible interfaces. This built in content management system is able to track all known differences in used screen resolutions, bandwidth and other variations.

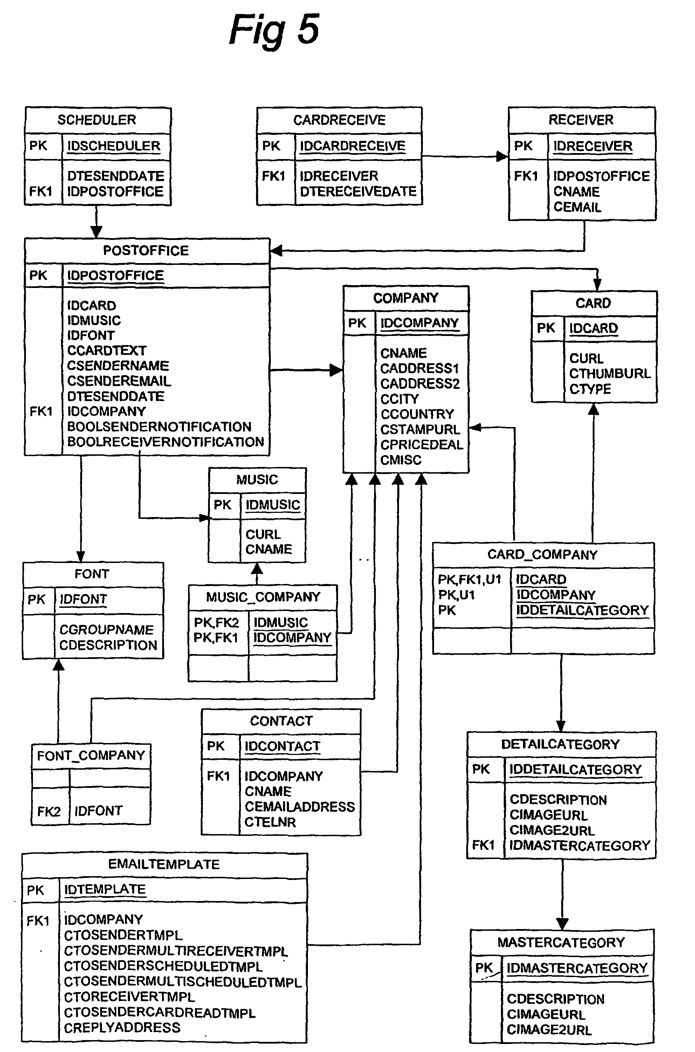

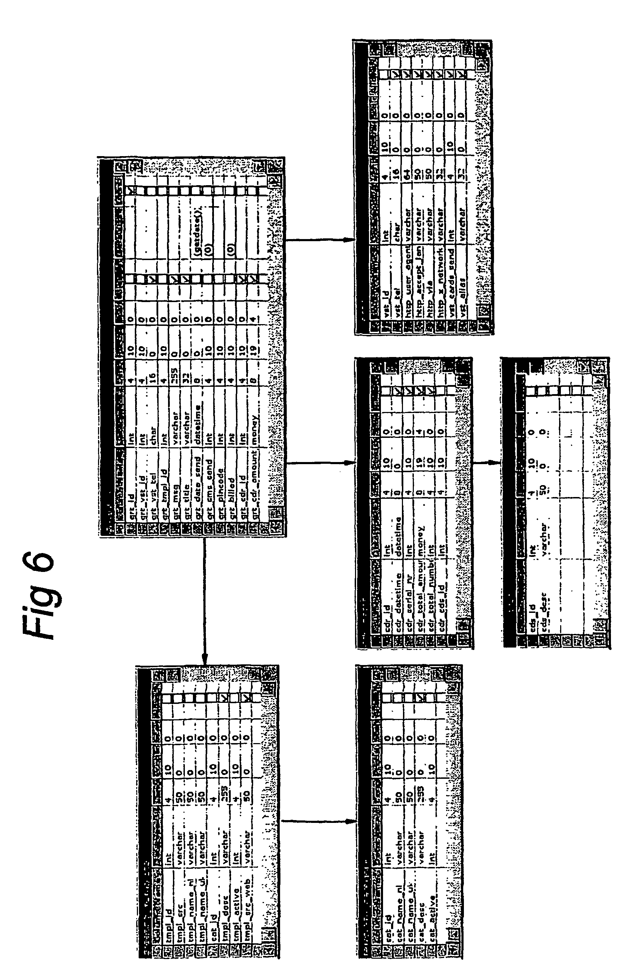

The very heart of the REM electronic greetings system consists out of relational databases 30(n). Relations are needed to enforce referential integrity across all primary-key fields. The databases 30(n) hold all the records of incoming users that have chosen to send one or more REM cards. Reference is made to figures 5 and 6 that show tables, fields and structures. Figure 5 shows an example of a database diagram E-card module whereas figure 6 shows a database diagram M-card module. The labels used in figure 6 have the following meaning.

### Greeting

Recipients data like phone number and message.

### Greeting Template

Names and location of all existing cards.

### Template Category

This table holds the records responsible for describing card types like: "congratulations" or "get well".

### Visitor

This table holds the records responsible for registering all users that have sent one or more cards.

### CDR-batch

This table holds the records responsible for registering all sent cards. Billing through the telecom provider is based on the contents of this table.

### CDR_Status

This table holds the data describing whether or not a transaction has been committed.

The REM application may be programmed using a variety of script languages. Components are being programmed and compiled using C++. The two most important script file formats for use within the XML environment are *.html, *.WML (Wireless Mark-up Language) and *.ASP (Active Server Pages) script files. These scripts are used to implement the following features:
- Dynamic Navigation Systems
- URL creation for both WAP and WEB retrieval purposes
- Automated Data-Record insertion for profiled users
- Automated Cold Data-Record insertion for all (to be billed) users

The scripts also call on a few components that are responsible for the following tasks:
- Automated Email Messaging service
- Automated SMS Messaging service
- Automated R-Card printing services

It is to be understood that the REM system is explained above with reference to sending Real, Electronic and Mobile greetings, respectively, by post, to personal computer and to mobile devices, respectively, but that the same principles apply for sending greetings to other electronic devices such as play stations, televisions, organisers, etc. The greetings may be sent from any such device to any other such device. Therefore, in the claims to follow, "computer arrangement" must be interpreted in such broad terms.

### List of abbreviations

- ASP -: Active Server Page
- GPRS -: General Packet Radio Service
- LDAP -: Lightweight Directory Access Protocol
- REM -: Real, Electronic, Mobile card system
- SMS -: Short Message Service
- TCP IP -: Transmission Control Protocol / Internet Protocol
- WAP -: Wireless Application Protocol
- WML -: Wireless Mark-up Language
- XML -: Extended Mark-up Language

## Claims

1. An electronic greetings system arranged to transmit electronic greetings to a recipient, said electronic greetings comprising at least one electronic greetings component, said electronic greetings system comprising at least one server (12(n), 14(n), 16(n), 18(n); n = 1, ..., N) and at least one database (30(n)) storing at least data regarding a plurality of electronic greetings components, the at least one server (12(n), 14(n), 16(n), 18(n); n = 1, ..., N) being arranged to:
• receive a first message from a user to select an electronic greetings component from said plurality of electronic greetings components from said at least one database (30(n));
• receive a second message from said user regarding an address of a recipient to whom said selected electronic greetings component is to be sent;
• transmitting said selected electronic greetings component to said recipient;
**characterized in that** said at least one server is also arranged to:
• provide said user with an option to select between delivery of said selected electronic greetings component as e-mail message to a computer system (10(1), 10(2)) through an e-mail address of said recipient or to a mobile device (2(1), 2(2)) of said recipient through using a mobile telephone number.
said electronic greetings components being stored in said at least one database (30(n)) in different sets each set having data regarding a predetermined resolution for presenting said electronic greetings component in a predermined way to said recipient, electronic greetings components to be delivered to a mobile device (2(1), 2(2)) being stored as downscaled versions.

2. An electronic greetings system according to claim 1, wherein said at least one server is arranged to deliver selected greetings components to said mobile device (2(1), 2(2)) using Wireless Application Protocol.

3. An electronic greetings system according to any of the preceding claims, wherein said at least one server is arranged to provide said user with the further option of sending said selected electronic greetings component in the form of a hard copy.

4. An electronic greetings system according to any of the preceding claims, wherein said at least one server is arranged to inform said recipient by means of an SMS message that the recipeint may collect said selected electronic greetings component from said at least one server by using a password included in said SMS message.

5. An electronic greetings system according to any of the preceding claims, wherein said database comprises an addresss book and at least one server is arranged to receive from said user data as to a specified way of sending said selected electronic greetings component to predetermined recipients and to store these data in said address book in relation to said recipients.

6. An electronic greetings system according to any of the preceding claims, wherein said at least one server is arranged to collect data as to an amount of money to be paid by said user in dependence on the number of cards the user has selected and to output these data for transmission to a telecommunication provider.

7. An electronic greetings system according to any of the preceding claims, wherein said at least one server is arranged to attach audio and/or video data to said electronic greetings component.

8. An electronic greetings system according to any of the preceding claims, wherein said at least one server comprises a plurality of subsets of server arrangements, one subset per predetermined telecommunication provider.

9. An electronic greetings system according to claim 8, wherein each of said subsets of server arrangements comprises:
• a broker server (12(n)) to direct said user to one of a plurality of portals;
• a membership server (14(n)) to authenticate users;
• a database server (16(n)) to store data in and retrieve required data from said at least one database (30(n));
• a transaction server (18(n)) to prepare said selected electronic greetings component to be sent as e-mail message to said computer system (10(1), 10(2)) through e-mail address of said recipient when said user has selected to send said electronic greetings component as e-mail message or to prepare said selected electronic greetings component to be sent as message to said mobile device (2(1), 2(2)) of said recipient through using said mobile telephone number if said user has selected to sent said electronic greetings component to said mobile device.

10. Method of transmitting electronic greetings by an electronic greetings system comprising at least one server (12(n), 14(n), 16(n), 18(n); n = 1, ..., N) and at least one database (30(n)) storing at least data regarding a plurality of electronic greetings components, the method comprising the following steps:
• receiving a first message from a user to select an electronic greetings component from said plurality of electronic greetings components from said at least one database (30(n));
• receiving a second message from said user regarding an address of a recipient to whom said selected electronic greetings component is to be sent;
• transmitting said selected electronic greetings component to said recipient;
**characterized in that** the method also comprises the steps of:
• storing said electronic greetings components in said at least one database (30(n)) in different sets each set having data regarding a predetermined resolution for presenting said electronic greetings component in a predetermined way to said recipient, electronic greetings components to be delivered to a mobile device being stored as downscaled versions;
• provide said user with an option to select between delivery of said selected electronic greetings component as e-mail message to a computer arrangement (10(1), 10(2)) through an e-mail address of said recipient or to a mobile device (2(1), 2(2)) of said recipient through using a mobile telephone number.

11. Computer program product that can be loaded by a computer system for transmitting electronic greetings the computer system comprising at least one server (12(n), 14(n), 16(n), 18(n); n = 1, ..., N) and at least one database (30(n)) storing at least data regarding a plurality of electronic greetings components, the computer program product, after being loaded, providing said computer system with the capacity to carry out the following steps:
• receiving a first message from a user to select an electronic greetings component from said plurality of electronic greetings components from said at least one database (30(n));
• receiving a second message from said user regarding an address of a recipient to whom said selected electronic greetings component is to be sent;
• transmitting said selected electronic greetings component to said recipient;
**characterized in that** said computer program product provides said at least one server also with the capacity of:
• storing said electronic greetings components in said at least one database (30(n)) in different sets each set having data regarding a predetermined resolution for presenting said electronic greetings component in a predetermined way to said recipient, electronic greetings components to be delivered to a mobile device being stored as downscaled versions;
• providing said user with an option to select between delivery of said selected electronic greetings component as e-mail message to a computer system (10(1), 10(2)) through an e-mail address of said recipient or to a mobile device (2(1), 2(2)) of said recipient through using a mobile telephone number.

12. A data carrier provided with a computer program product accordung to claim 11.

## Patentansprüche

1. Elektronisches Grußsystem, ausgestaltet um elektronische Grüße an einen Empfänger zu übersenden, wobei die elektronischen Grüße mindestens eine elektronische Grußkomponente umfassen, wobei das elektronische Grußsystem mindestens einen Server (12(n), 14(n), 16(n), 18(n); n=1,...,N) und mindestens eine Datenbank (30(n)), welche mindestens Daten bezüglich einer Mehrzahl von elektronischen Grußkomponenten speichert, umfasst, wobei der mindestens eine Server (12(n), 14(n), 16(n), 18(n); n=1,...,N) ausgestaltet ist um:
• eine erste Nachricht von einem Benutzer zu empfangen, um eine elektronische Grußkomponente aus der Mehrzahl von elektronischen Grußkomponenten aus der mindestens einen Datenbank (30(n)) auszuwählen;
• eine zweite Nachricht des Benutzers bezüglich einer Adresse eines Empfängers, an welchen die ausgewählte elektronische Grußkomponente gesendet werden soll, zu empfangen;
• die ausgewählte elektronische Grußkomponente an den Empfänger zu übersenden;
**dadurch gekennzeichnet, dass** der mindestens eine Server weiterhin ausgestaltet ist, um:
• dem Benutzer eine Möglichkeit zur Verfügung zu stellen, um auszuwählen zwischen einer Überbringung der ausgewählten elektronischen Grußkomponente als Email-Nachricht an ein Computersystem (10(1), 10(2)) über eine Emailadresse des Empfängers oder an ein mobiles Gerät (2(1), 2(2)) des Empfängers unter Verwendung einer Mobiltelefonnummer,
wobei die elektronischen Grußkomponenten in der mindestens einen Datenbank (30(n)) in verschiedenen Gruppen gespeichert sind, wobei jede Gruppe Daten aufweist bezüglich einer vorgegebenen Auflösung, um die elektronische Grußkomponente in einer vorgegebenen Weise dem Empfänger zu präsentieren, wobei elektronische Grußkomponenten, welche an ein mobiles Gerät (2(1), 2(2)) übermittelt werden sollen, als herunterskalierte Versionen gespeichert sind.

2. Elektronisches Grußsystem gemäß Anspruch 1, wobei der mindestens eine Server ausgestaltet ist, um ausgewählte Grußkomponente zum mobilen Gerät (2(1), 2(2)) zu senden unter Verwendung von Wireless Application Protocol.

3. Elektronisches Grußsystem gemäß einem der vorhergehenden Ansprüche, wobei der mindestens eine Server ausgestaltet ist, um dem Benutzer die zusätzliche Möglichkeit zur Verfügung zu stellen, die ausgewählte elektronische Grußkomponente in Form einer Hardcopy zu schicken.

4. Elektronisches Grußsystem gemäß einem der vorhergehenden Ansprüche, wobei der mindestens eine Server ausgestaltet ist, um den Empfänger mittels einer SMS-Nachricht zu informieren, dass der Empfänger die ausgewählte elektronische Grußkomponente von dem mindestens einen Server unter Verwendung eines in der SMS-Nachricht enthaltenen Passwortes abholen kann.

5. Elektronisches Grußsystem gemäß einem der vorhergehenden Ansprüche, wobei die Datenbank ein Adressbuch umfasst und wobei mindestens ein Server ausgestaltet ist, um von dem Benutzer Daten bezüglich einer vorgegebenen Weise zum Verschicken der ausgewählten elektronischen Grußkomponente an vorgegebene Empfänger zu empfangen und um diese Daten in dem Adressbuch unter Bezugnahme auf die Empfänger zu speichern.

6. Elektronisches Grußsystem gemäß einem der vorhergehenden Ansprüche, wobei der mindestens eine Server ausgestaltet ist, um Daten bezüglich einer Geldmenge, welche von dem Benutzer in Abhängigkeit von der Anzahl der Karten, die der Benutzer ausgewählt hat, zu zahlen ist, zu sammeln und um diese Daten zur Übersendung an einen Telekommunikationsanbieter auszugeben.

7. Elektronisches Grußsystem gemäß einem der vorhergehenden Ansprüche, wobei der mindestens eine Server ausgestaltet ist, um Audio- und/oder Videodaten an die elektronische Grußkomponente anzuhängen.

8. Elektronisches Grußsystem gemäß einem der vorhergehenden Ansprüche, wobei der mindestens eine Server eine Mehrzahl von Unteranordnungen von Serveranordnungen umfasst, eine Unteranordnung pro vorgegebenem Telekommunikationsanbieter.

9. Elektronisches Grußsystem gemäß Anspruch 8, wobei jede der Unteranordnungen von Serveranordnungen umfasst:
• einen Makler-Server (12(n)), um den Benutzer an eines einer Mehrzahl von Portalen zu verweisen;
• einen Mitgliederserver (14(n)), um Benutzer zu authentifizieren;
• einen Datenbankserver (16(n)), um darin Daten zu speichern und um erforderliche Daten von mindestens einer Datenbank (30(n)) zu empfangen;
• ein Transaktionsserver (18(n)), um die ausgewählte elektronische Grußkomponente darauf vorzubereiten, als Email-Nachricht an das Computersystem (10(1), 10(2)) über die Email-Adresse des Empfängers versendet zu werden, wenn der Benutzer ausgewählt hat, dass die elektronische Grußkomponente als Email-Nachricht versendet werden soll, oder um die ausgewählte elektronische Grußkomponente darauf vorzubereiten, als Nachricht an das mobile Gerät (2(1), 2(2)) des Empfängers unter Verwendung der Mobiltelefonnummer versendet zu werden, wenn der Benutzer ausgewählt hat, dass die elektronische Grußkomponente an das mobile Gerät übersendet werden soll.

10. Verfahren zum Übermitteln von elektronischen Grüßen über ein elektronisches Grußsystem, welches mindestens einen Server (12(n), 14(n), 16(n), 18(n); n=1,...,N) und mindestens eine Datenbank (30(n)), welche mindestens Daten bezüglich einer Mehrzahl von elektronischen Grußkomponenten speichert, umfasst, wobei das Verfahren die folgenden Schritte umfasst:
• Empfangen einer ersten Nachricht von einem Benutzer, um eine elektronische Grußkomponente aus einer Mehrzahl von elektronischen Grußkomponenten aus der mindestens einen Datenbank (30(n)) auszuwählen;
• Empfangen einer zweiten Nachricht von dem Benutzer bezüglich einer Adresse eines Empfängers, an welchen die ausgewählte elektronische Grußkomponente gesendet werden soll;
• Übersenden der ausgewählten elektronischen Grußkomponente an den Empfänger;
**dadurch gekennzeichnet, dass** das Verfahren weiterhin folgende Schritte aufweist:
• Speichern der elektronischen Grußkomponente in der mindestens einen Datenbank (30(n)) in verschiedenen Gruppen, wobei jede Gruppe Daten bezüglich einer vorgegebenen Auflösung aufweist, um die elektronische Grußkomponente in einer vorgegebenen Weise dem Empfänger zu präsentieren,
wobei elektronische Grußkomponenten, welche an ein mobiles Gerät übermittelt werden sollen, als herunterskalierte Versionen gespeichert sind;
• zur Verfügung Stellen einer Option an den Benutzer, um zwischen einer Überbringung der ausgewählten elektronischen Grußkomponente als Email-Nachricht an eine Computeranordnung (10(1), 10(2)) über eine Emailadresse des Empfängers oder an ein mobiles Gerät (2(1), 2(2)) des Empfängers unter Verwendung einer Mobiltelefonnummer auszuwählen.

11. Computerprogrammprodukt, das von einem Computersystem geladen werden kann, um elektronische Grüße zu übermitteln, wobei das Computersystem mindestens einen Server (12(n), 14(n), 16(n), 18(n); n=1,...,N) und mindestens eine Datenbank (30(n)), die mindestens Daten bezüglich einer Mehrzahl von elektronischen Grußkomponenten speichert, umfasst, wobei das Computerprogrammprodukt, nachdem es geladen ist, dem Computersystem ermöglicht, die folgenden Schritte auszuführen:
• Empfangen einer ersten Nachricht von einem Benutzer, um eine elektronische Grußkomponente aus einer Mehrzahl von elektronischen Grußkomponenten aus der mindestens einen Datenbank (30(n)) auszuwählen;
• Empfangen einer zweiten Nachricht von dem Benutzer bezüglich einer Adresse eines Empfängers, an welchen die ausgewählte elektronische Grußkomponente gesendet werden soll;
• Übermitteln der ausgewählten elektronischen Grußkomponente an den Empfänger;
**dadurch gekennzeichnet, dass** das Computerprogrammprodukt dem mindestens einen Server weiterhin die Möglichkeit zur Verfügung stellt, um:
• die elektronische Grußkomponente in der mindestens einen Datenbank (30(n)) in verschiedenen Gruppen zu speichern, wobei jede Gruppe Daten bezüglich einer vorgegebenen Auflösung aufweist, um die elektronische Grußkomponente in einer vorgegebenen Weise dem Empfänger zu präsentieren, wobei elektronische Grußkomponenten, welche an ein mobiles Gerät übermittelt werden sollen, als herunterskalierte Versionen gespeichert sind;
• dem Benutzer eine Option zur Verfügung zu stellen, um zwischen einer Überbringung der ausgewählten elektronischen Grußkomponente als Email-Nachricht an ein Computersystem (10(1), 10(2)) über eine Emailadresse des Empfängers oder an ein mobiles Gerät (2(1), 2(2)) des Empfängers unter Verwendung einer Mobiltelefonnummer auszuwählen,

12. Datenträger mit einem Computerprogrammprodukt gemäß Anspruch 11.

## Revendications

1. Système de carte de voeux électronique organisé pour transmettre une carte de voeux électronique à un destinataire, ladite carte de voeux électronique comportant au moins un élément de carte de voeux électronique, ledit système de carte de voeux électronique comportant au moins un serveur (12(n), 14(n), 16(n), 18(n) ; n=1, ..., N) et au moins une base de donnés (30(n)) stockant au moins des données concernant une pluralité d'éléments de cartes de voeux électroniques, ledit serveur (12(n), 14(n), 16(n), 18(n) ; n=1, ..., N) étant organisé pour :
- recevoir un premier message provenant d'un utilisateur pour choisir un élément de carte de voeux électronique parmi ladite pluralité d'éléments de cartes de voeux électroniques dans ladite base de données (30(n)) ;
- recevoir un second message provenant dudit utilisateur concernant une adresse d'un destinataire à qui ledit élément de carte de voeux électronique choisi doit être envoyé ;
- transmettre ledit élément de carte de voeux électronique choisi audit destinataire ;
**caractérisé en ce que** ledit serveur est aussi organisé pour :
- offrir audit utilisateur l'option de choisir entre la distribution dudit élément de carte de voeux électronique choisi en tant que message de courrier électronique à un système informatique (10(1), 10(2)) par l'intermédiaire d'une adresse de messagerie électronique dudit destinataire ou à un dispositif mobile (2(1), 2(2)) dudit destinataire en utilisant un numéro de téléphone mobile.
lesdits éléments de cartes de voeux électroniques étant stockés dans ladite base de données (30(n)) dans différents ensembles, chaque ensemble contenant des données concernant une résolution prédéterminée pour présenter ledit élément de carte de voeux électronique de façon prédéterminée audit destinataire, les éléments de cartes de voeux électroniques devant être distribués à un dispositif mobile (2(1), 2(2)) étant stockés en tant que versions réduites.

2. Système de carte de voeux électronique selon la revendication 1, dans lequel ledit serveur est organisé pour distribuer l'élément de carte de voeux choisi vers ledit dispositif mobile (2(1), 2(2)) en utilisant le protocole d'application sans fil (WAP).

3. Système de carte de voeux électronique selon l'une quelconque des revendications précédentes, dans lequel ledit serveur est organisé pour fournir audit utilisateur l'option supplémentaire d'envoyer ledit élément de carte de voeux électronique choisi sous forme d'une copie papier.

4. Système de carte de voeux électronique selon l'une quelconque des revendications précédentes, dans lequel ledit serveur est organisé pour informer ledit destinataire au moyen d'un message SMS que le destinataire peut récupérer ledit élément de carte de voeux électronique choisi sur ledit serveur en utilisant un mot de passe inclus dans ledit message SMS.

5. Système de carte de voeux électronique selon l'une quelconque des revendications précédentes, dans lequel ladite base de données comporte un carnet d'adresses et au moins un serveur est organisé pour recevoir de la part dudit utilisateur des données relatives à une manière spécifiée d'envoyer ledit élément de carte de voeux électronique choisi à des destinataires prédéterminés et pour stocker ces données dans ledit carnet d'adresses en relation avec lesdits destinataires.

6. Système de carte de voeux électronique selon l'une quelconque des revendications précédentes, dans lequel ledit serveur est organisé pour collecter les données relatives à une somme d'argent devant être payée par ledit utilisateur en fonction du nombre de cartes que l'utilisateur a choisies et pour sortir ces données pour une transmission à un fournisseur de télécommunication.

7. Système de carte de voeux électronique selon l'une quelconque des revendications précédentes, dans lequel ledit serveur est organisé pour joindre des données audio et / ou vidéo audit élément de carte de voeux électronique.

8. Système de carte de voeux électronique selon l'une quelconque des revendications précédentes, dans lequel ledit serveur comporte une pluralité de sous-ensembles d'organisations de serveur, un sous-ensemble par fournisseur de télécommunication prédéterminé.

9. Système de carte de voeux électronique selon la revendication 8, dans lequel chacun desdits sous-ensembles d'organisations de serveur comporte :
- un serveur de courtage (12(n)) pour diriger ledit utilisateur vers un portail d'une pluralité de portails ;
- un serveur d'adhésion (14(n)) pour authentifier les utilisateurs ;
- un serveur de base de données (16(n)) pour y stocker les données et pour retrouver les données requises dans ladite base de données (30(n));
- un serveur de transaction (18(n)) pour préparer ledit élément de carte de voeux électronique choisi devant être envoyé en tant que message de courrier électronique audit système informatique (10(1), 10(2)) par l'intermédiaire de l'adresse de courrier électronique dudit destinataire lorsque ledit utilisateur a choisi d'envoyer ledit élément de carte de voeux électronique en tant que message de courrier électronique ou pour préparer ledit élément de carte de voeux électronique choisi devant être envoyé en tant que message audit dispositif mobile (2(1), 2(2)) dudit destinataire en utilisant ledit numéro de téléphone mobile si ledit utilisateur a choisi d'envoyer ledit élément de carte de voeux électronique audit dispositif mobile.

10. Procédé de transmission de cartes de voeux électroniques par un système de carte de voeux électronique comportant au moins un serveur (12(n), 14(n), 16(n), 18(n) ; n=1, ..., N) et au moins une base de données (30(n)) stockant au moins des données concernant une pluralité d'éléments de cartes de voeux électroniques, le procédé comportant les étapes suivantes :
- réception d'un premier message provenant d'un utilisateur pour choisir un élément de carte de voeux électronique parmi ladite pluralité d'éléments de cartes de voeux électroniques provenant de ladite base de données (30(n)) ;
- réception d'un second message provenant dudit utilisateur concernant une adresse d'un destinataire à qui ledit élément de carte de voeux électronique choisi doit être envoyé ;
- transmission dudit élément de carte de voeux électronique choisi audit destinataire ;
**caractérisé en ce que** le procédé comporte également l'étape de :
- stockage desdits éléments de cartes de voeux électroniques dans ladite base de données (30(n)) dans différents ensembles, chaque ensemble contenant des données concernant une résolution prédéterminée pour présenter ledit élément de carte de voeux électronique de façon prédéterminée audit destinataire, les éléments de cartes de voeux électroniques devant être distribués à un dispositif mobile étant stockés en tant que versions réduites ;
- fourniture audit utilisateur d'une option pour choisir entre la distribution dudit élément de carte de voeux électronique choisi en tant que message de courrier électronique à une organisation informatique (10(1), 10(2)) par l'intermédiaire d'une sadresse de courrier électronique dudit destinataire ou à un dispositif mobile (2(1), 2(2)) dudit destinataire en utilisant un numéro de téléphone mobile.

11. Produit de programme informatique qui peut être chargé par un système informatique pour transmettre des cartes de voeux électroniques, le système informatique comportant au moins un serveur (12(n), 14(n), 16(n), 18(n) ; n =1, ..., N) et au moins une base de données (30(n)) stockant au moins des données concernant une pluralité d'éléments de cartes de voeux électroniques, le produit de programme informatique, après avoir été chargé, donnant audit système informatique la capacité de réaliser les étapes suivantes :
- réception d'un premier message provenant d'un utilisateur pour choisir un élément de carte de voeux électronique parmi ladite pluralité • d'éléments de cartes de voeux électroniques provenant de ladite base de données (30(n)) ;
- réception d'un second message provenant dudit utilisateur concernant une adresse d'un destinataire à qui ledit élément de carte de voeux électronique choisi doit être envoyé ;
- transmission dudit élément de carte de voeux électronique choisi audit destinataire ;
**caractérisé en ce que** ledit produit de programme informatique fournit également audit serveur la capacité de :
- stocker lesdits éléments de cartes de voeux électroniques dans ladite base de données (30(n)) dans différents ensembles, chaque ensemble contenant des données concernant une résolution prédéterminée pour présenter ledit élément de carte de voeux électronique de façon prédéterminée audit destinataire, les éléments de cartes de voeux électroniques devant être distribués à un dispositif mobile étant stockés en tant que versions réduites ;
- fournir audit utilisateur une option pour choisir entre la distribution dudit élément de carte de voeux électronique choisi en tant que message de courrier électronique à un système informatique (10(1), 10(2)) par l'intermédiaire d'une adresse de courrier électronique dudit destinataire ou à un dispositif mobile (2(1), 2(2)) dudit destinataire en utilisant un numéro de téléphone mobile.

12. Support de données fourni avec un produit de programme informatique selon la revendication 11.
